# EUROPEAN PATENT SPECIFICATION

(11) **EP 4 685 054 B1**
(45) Date of publication and mention of the grant of the patent: **25.11.2026**
(21) Application number: 24382793.8
(22) Date of filing: 22.07.2024
(51) Int. Cl.: B64D 9/00, G06Q 10/04, G06Q 10/083

(54) **COMPUTER IMPLEMENTED METHOD TO PREVENT A NON-VIABLE STATE OF LOADING IN AN AIRCRAFT**
COMPUTERIMPLEMENTIERTES VERFAHREN ZUR VERHINDERUNG EINES FLUGUNTAUGLICHEN BELADUNGSZUSTANDS IN EINEM FLUGZEUG
PROCÉDÉ MIS EN OEUVRE PAR ORDINATEUR POUR EMPÊCHER UN ÉTAT NON VIABLE DE CHARGEMENT DANS UN AÉRONEF

(43) Date of publication of application: 28.01.2026
(73) Proprietor: AIRBUS OPERATIONS, S.L.U., 28906 Getafe, Madrid (ES)
(72) Inventor: FIESTRAS CORCHO, Alejandro, E-28906 Getafe, Madrid (ES)
(74) Representative: ABG Intellectual Property Law, S.L.

(56) References cited:
- EP-B1- 3 508 423
- AU-A1- 2017 208 334
- CN-A- 111 086 648
- CN-A- 115 471 152
- US-A1- 2022 284 531
- TSEREMOGLOU IORDANIS ET AL: "A combined forecasting and packing model for air cargo loading: A risk-averse framework", TRANSPORTATION RESEARCH PART E: LOGISTICS AND TRANSPORTATION REVIEW, PERGAMON, AMSTERDAM, NL, vol. 158, 20 January 2022 (2022-01-20), XP086953709, ISSN: 1366-5545, [retrieved on 20220120], DOI: 10.1016/J.TRE.2021.102579

## Description

### FIELD OF THE INVENTION

The present invention is related to a computer implemented method to prevent a non-viable state of loading in an aircraft before the aircraft is loaded. Given a layout of the load space and a set of load units, the method estimates the state of loading and prevents loads that would be non-viable once the aircraft is loaded.

### PRIOR ART

One of the most serious flight safety problems in an aircraft is the lack of balance due to inadequate load distribution in the aircraft's cargo space.

The loads on board an aircraft are placed in pre-established spaces to allow the load to be distributed as evenly as possible. However, each load has a different value depending on its weight, and its distance from the aircraft central axil (the axis parallel to the roll axis) defines a lateral momentum which is equal to the value of the weight times the distance to the axis. In an ideal situation the lateral momentum of one load must be compensated by the lateral momentum of another load.

The cargo space of an aircraft is usually distributed in rows. In each row there are a plurality of cargo spaces and all of them can be separated into two groups, the spaces on one side of the symmetry axis or central axis and those on the other side. Depending on how the orientation is arbitrarily chosen, one side will be on the right and the other side on the left, for example according to a top plan view.

In some cases, some of these rows have the spaces corresponding to half a row disabled. This creates a problem because, when the available spaces are loaded on the other side of the same row, each of the load units generates a lateral momentum that is not compensated. A row in this condition will be named an empty row.

It is possible for an empty row to be compensated, at least partially, by another empty row in which the empty spaces are on the opposite side. However, it is of interest especially in the case where there is no such compensation.

One might think that, knowing the layout of the aircraft, the empty rows and their position and the loads to be installed in the cargo space, it is possible to pre-distribute the position of each cargo unit in order to minimize the lateral momentum of the entire load. However, this is not possible because it is not known a priori which rows are empty and what weight each individual load has.

At best, it is usual to estimate at the time of loading which loads are heavier and which are not, and then the person in charge of distributing the load can make use of this arrangement when carrying loads on either side of the central axis.

However, it is not established a control that prevents starting the loading process of an aircraft because without this information it establishes the condition of viability or non-viability of the load. A total load lateral momentum is considered to result in a viable load when it does not exceed a maximum value of the lateral momentum determined for each aircraft. The present invention overcomes this problem by making a plurality of simulations of loads and, depending on the results of the simulation stablishes a viability or a non-viability state preventing the loading process when the state is non-viable. Both US2022/284531A1 and CN111086648A disclose methods to optimize the load distribution of an aircraft without performing load simulations.

### DESCRIPTION OF THE INVENTION

The present invention is a computer implemented method to prevent a non-viable state of loading in an aircraft.

The method provides information that is subsequently processed checking if the aircraft can be loaded or not according to the state. That is, if the state is "viable" then the aircraft is loaded but if the state is "non-viable" then the aircraft is not loaded. The state "viable" or "non-viable" may be represented by binary variables or by more complex structures having additional information like the estimated balance of the load.

The load to be loaded in the aircraft comprises a plurality of load units.

The method, according to a first aspect of the invention comprises the steps:
*in any order*
*a) receiving data of a layout of a load space of the aircraft, the layout comprising*
   *a set of N rows, each row comprising a set of M locations, the M locations with a subset of left location*/*s and a subset of right location*/*s;*
   *for each location the distance of the location to an axis of symmetry for measuring lateral momentums of loads, the axis of symmetry parallel to the roll axis of the aircraft;*
*b) receiving a maximum load unbalanced lateral momentum value;*
*c) receiving the probability function or the probability distribution of the weight for a load unit;*
*d) predetermining a maximum number of empty rows R to be checked, being an empty row a row where one side, the right side or the left side, is locked preventing the locations of said selected rows to be loaded while the opposite side is unlocked allowing to be loaded.*

The layout of the load space of the aircraft identifies the locations where a load unit may be positioned. The load space is distributed in rows, each rod having one or more locations at a right side of a central axis of symmetry, the axis of symmetry being parallel to the roll axis of the aircraft. Any load placed at a distance from this axis of symmetry causes a lateral momentum equal to the weight of the load multiplied by the distance from the axis of symmetry.

Each row has one or more locations at the right side and one or more locations at the left side, wherein right and left are selected, only as a reference for this description, as the right and left sides according to a plan view.

The method further comprises receiving information about the maximum load unbalanced lateral momentum allowed for the specific aircraft associated with the layout. This maximum value will be used as the reference value to check whether or not the estimated value of the load unbalance lateral momentum is allowable or not.

As previously mentioned, an empty row will identify a row where one side of the row is locked and cannot be loaded. This is the case when the fixing means is broken or there is some specific reason that prevents that side of the row from being used to store the load unit.

In this first aspect of the invention, the relevant empty rows are those that are at the same side, since empty rows with the locked side being the opposite can be compensated. That is, the number of empty rows that cause un unbalanced lateral momentum are those that are at the same side.

The method estimates the lateral momentum for an unbalanced load when the layout has no empty rows, when there is one empty row, or when there are two empty rows, etc., until a maximum number of empty rows R.

The method according to the first aspect of the invention further comprises the steps: *for i* = 0, 1, ... , *R, carry out a plurality of simulations of loading the load space according to the received layout, wherein for each simulation*
*1) randomly selecting i rows as empty rows, such empty rows being empty at the same side;*
*2) determining the weight of each unlocked location as a random value responsive to the probability function or the probability distribution of the weight generating a random load distribution.*

These steps randomly select rows that are empty (with locked load locations at one side, and all the selected rows with locked load locations at the same side), and randomly populates load units according to a predetermined probability function. It has been indicated that the weight of each unlocked location is responsive to the probability function or the probability distribution since the probability function is defined by its probability distribution and, the probability distribution is defined by its probability function.

Likewise, it is considered equivalent to use other ways of representing the probability of the value of a unit load, for example as a percentage of weight with respect to the maximum weight to be loaded.

As a result of these steps, for each number of empty rows a plurality of statistically estimated distribution of weights over the entire layout is available. That is, for each number of empty rows, there is a plurality of statistical distributed loads causing a different lateral momentum.

The method according to the first aspect of the invention further comprises the steps: *for each i* = 0, 1, ..., *R,*
*i. generating a random load distribution by accumulating the plurality of simulated random load distributions with i empty rows;*
*ii. determining the lateral momentum of the accumulated distribution of the load in respect to the axis of symmetry with i empty rows;*
*iii. determining the state of loading in an aircraft with i empty rows as viable if the unbalanced lateral momentum measured on the accumulated random load distribution of previous step ii) is lower than maximum load unbalanced lateral momentum value or, as non-viable otherwise;*
*providing data to be processed when loading the aircraft identifying load distributions to be prevented as those with the state as non-viable responsive to the number of empty rows.*

In this set of steps, first and for each number of empty rows, a load distribution is generated as a result of accumulating all the distributions obtained randomly in the previous steps. That is, instead of having a plurality of random experiments, a single distribution is obtained. It is this distribution that allows the calculation of the lateral momentum with respect to the symmetry axis, and this calculation is repeated for each number of empty rows.

For each number of empty rows, the lateral momentum it generates is calculated and compared with the maximum value. As a result, there are as many comparisons as the number of empty rows simulated. Each result for a number of empty rows is independent of the result for a different number of empty rows.

These results are provided by the method so that the information is sent to the device or processor in charge of establishing the safety of the aircraft at the time of loading.

At the time of loading, it is known how many rows are empty rows. From the information provided by the method according to the first aspect of the invention the calculated state for that number of empty rows is verified and, if the calculated state is non-viable then the aircraft is not loaded since it is estimated that the loading would result in a lateral momentum along the roll axis greater than that permitted. If, on the other hand, for that number of empty rows, the value of the state is "viable" then the aircraft is allowed to be loaded and the loading process proceeds. That is, the information is used by the next step to establish whether the aircraft is loaded in a way that ensures a safe flight or not.

According to an embodiment of the previous disclosed method, *for the selected i rows in step 1), step 2) is executed a plurality of times generating a plurality of random load distributions that are subsequently accumulated into a single random load distribution.*

According to a further embodiment of the previous disclosed embodiments, *wherein steps 1) and 2) are executed a plurality of times randomly selecting a different set of empty rows.*

According to this embodiment, the same number of empty rows may have different locations and, in this embodiment a plurality of combinations of locations for the empty rows is explored providing an enriched distribution that is subsequently accumulated. This allows to identify distributions where the location of the empty rows may provide a different result. This is the case for instance where the rows have different space distribution of the load locations and the, selecting a different row as empty row will cause a different lateral momentum even for the same weight.

According to a further embodiment of any of the previous disclosed embodiments R = *N.*

In this particular embodiment all cases are explored wherein even the entire airplane has empty rows. In this case method provides information for any possibility of layout.

According to a further embodiment of any of the previous disclosed embodiments, *it is further determined the weight of each unlocked location as a random value responsive to the probability function or the probability distribution of the weight for a load unit is according to the following steps:*
- *generating a list of weights for the total number of unlocked locations according to the probability function or the probability distribution;*
- *sorting the generated list;*
- *for each row, assigning the loads to unlocked locations from the list according to the sorted order minimizing the unbalanced lateral momentum per row.*

In either case, whenever it is stated that a value of the weight of a unit load is assigned responsive to the probability density function, it should be interpreted as taking a random value according to the probability density function or the probability distribution.

In some real situations, the operators in charge of loading the aircraft decide to arrange the loads by weight and distribute rows using ordered weights, for example alternating on one side and the opposite side, in opposite positions and at the same distance, to carry out a load that reduces the lateral momentum of loads with very different weights. If the weights of two unit loads are very different then, since the sorting process groups unit loads with close weights, such two load would be in different rows and would be at least partially compensated with the weight of other load unit with a close weight.

This action reduces the resulting lateral momentum of the whole set of load units and is introduced into the simulation process but, as the loads are not known, the sorting process is carried out on the whole set of weights, said weights randomly determined by sampling the probability density function. In this case the number of situations leading to non-viable states is expected to be smaller.

A second aspect of the invention is a data processing system comprising a processor configured to perform the steps of a method according to the first aspect of the invention or, to any of the embodiments of the first aspect of the invention.

A third aspect of the invention is a computer program product comprising instructions which, when the program is executed by a computer, cause the computer to carry out the steps of a method according to the first aspect of the invention or, to any of the embodiments of the first aspect of the invention.

### DESCRIPTION OF THE DRAWINGS

These and other features and advantages of the invention will be seen more clearly from the following detailed description of a preferred embodiment provided only by way of illustrative and non-limiting example in reference to the attached drawings.
- Figure 1: This figure shows an embodiment of layout that is being processed by a processor in order to estimate the lateral momentum or torque generated by the lack of load balance with respect to the aircraft's roll axis when the space of load has two empty rows.
- Figure 2: This figure shows schematically the loading process of an airplane where the method provides a security system preventing to load estimated as a load non-viable.

### DETAILED DESCRIPTION OF THE INVENTION

As will be appreciated by one skilled in the art, aspects of the present invention may be embodied as a system, method or computer program product.

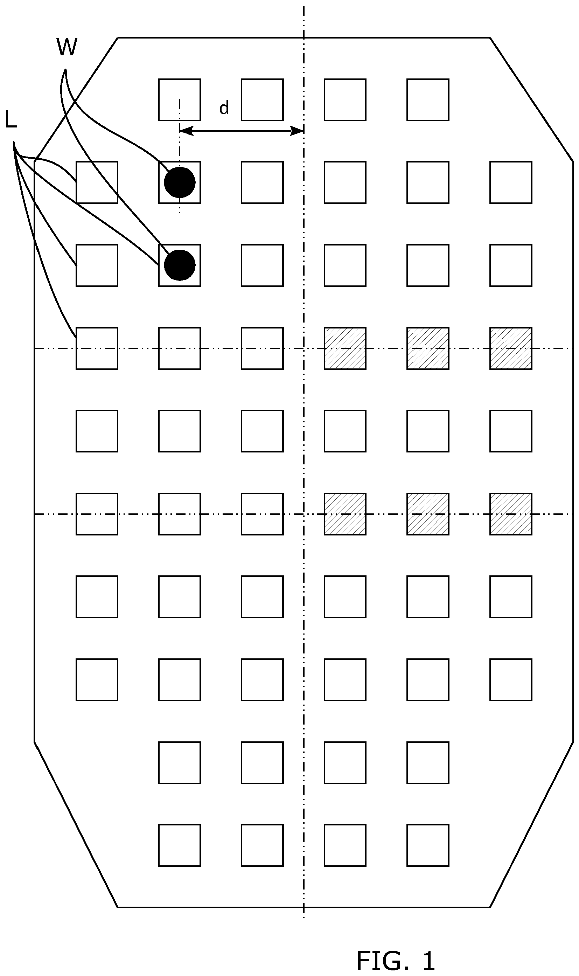

According to an embodiment of the method, there is a first step receiving data, in this case through a data line, providing a request of state of viability of load for an airplane. As figure 1 shows, along the information, the layout of the space of load of the airplane shows those locations (L) where a load unit (W) may be placed and fixed. The layout schematically shows the locations (L) as squares and, if a load unit (W) is located centered in the location (L), the load unit (W) causes a lateral momentum in respect to a symmetry axis (X-X'), the symmetry axis (X-X') being parallel to the roll axis of the airplane. The summation of the lateral momentums of all unit loads (W) is the one that must be compensated by the wings and therefore, depending on the airplane, a maximum lateral momentum of the whole load is stablished in order to ensure the safety of the airplane.

At this stage only the number of locations and the total load to be loaded is known and therefore it is defined that each load unit (W) statistically shows a Gaussian distribution of mean equal to the total load divided by the number of available locations and a predetermined variance.

Figure 1 also shows two load units (W) already installed and that the lateral momentum of one of them is calculated as the weight of the load unit (W), estimated randomly sampling a Gaussian probability function, multiplied by the distance (d) from the center of mass to the axis of symmetry.

The maximum number of lateral momentum and the maximum number of empty rows R is also received as data.

The method generates a plurality of simulations for each i = 0, 1, ... , *R*, by:
- randomly selecting i rows as empty rows, such empty rows being empty at the same side;
- determining the weight of each unlocked location as a random value responsive to the probability function or the probability distribution of the weight generating a random load distribution;

In one of these steps, when i = 2, two empty rows are selected: the empty row 4 starting to count rows from the row at the top of the figure, and row 6 wherein the two selected empty rows are not allowed to be loaded at the right side. The locked locations (L) are identified by dashed squares.

Once the simulation has sampled the weight for each unlocked location (L) such simulation is repeated a plurality of times allowing to obtain an aggregated or accumulated statistical distribution. This resulting accumulated statistical distribution is used to compute the unbalanced lateral momentum that is identified for i = 2.

If the unbalanced lateral momentum is larger than the maximum lateral momentum allowed for the airplane, then the status for i = 2 is determined as being non-viable.

The same procedure is repeated for the other i values.

According to another embodiment, the accumulated distribution is enriched since the two selected rows is randomly selected a plurality of times providing information of a plurality of cases where, for instance, the selected row has different conditions. This is the case of the first row or, the two rows located and the end where the number of locations (L) at each side is lower and closer to the symmetry axis.

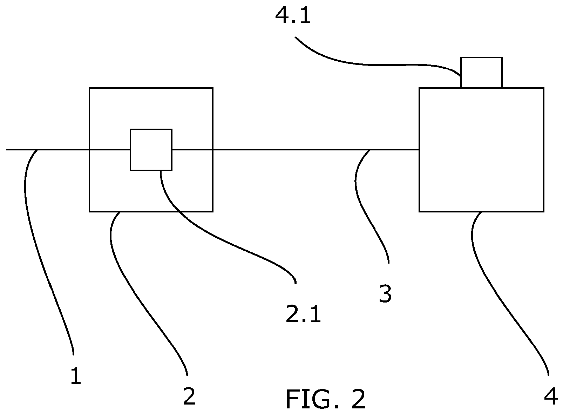

Figure 2 shows an input line (1) providing the initial data to a system (2) comprising a processor (2.1) adapted to carry out a method according to the first aspect of the invention and, an output line (3) connected to a checking system (4) where the operator assigned to control the loading of the aircraft indicates which rows are empty rows and, in view of the information provided by the system (2) verifies the status for that number of empty rows.

When the status is non-viable, an alarm (4.1) is triggered and the aircraft is prevented from loading in these circumstances, preventing it from flying in unsafe conditions.

## Claims

1. Computer implemented method to prevent a non-viable state of loading in an aircraft, the load to be loaded in the aircraft comprising a plurality of load units (W), the method comprising:
a) receiving data of a layout of a load space of the aircraft, the layout comprising
a set of *N* rows, each row comprising a set of M locations (L), the M locations (L) with a subset of left location/s (L) and a subset of right location/s (L);
for each location (L) the distance of the location (L) to an axis of symmetry (X-X') for measuring lateral momentums of loads, the axis of symmetry (X-X') parallel to the roll axis of the aircraft;
b) receiving a maximum load unbalanced lateral momentum value;
c) receiving the probability function or the probability distribution of the weight for a load unit (W);
d) predetermining a maximum number of empty rows *R* to be checked, being an empty row a row where one side, the right side or the left side, is locked preventing the locations (L) of said selected rows to be loaded while the opposite side is unlocked allowing to be loaded;
for *i* = 0, 1, ... , *R,* carry out a plurality of simulations of loading the load space according to the received layout, wherein for each simulation
1) randomly selecting *i* rows as empty rows, such empty rows being empty at the same side;
2) determining the weight of each unlocked location (L) as a random value responsive to the probability function or the probability distribution of the weight generating a random load distribution;
for each *i* = 0, 1, ... , *R,*
i. generating a random load distribution by accumulating the plurality of simulated random load distributions with *i* empty rows;
ii. determining the lateral momentum of the accumulated distribution of the load in respect to the axis of symmetry (X-X') with *i* empty rows;
iii. determining the state of loading in an aircraft with *i* empty rows as viable if the unbalanced lateral momentum measured on the accumulated random load distribution of previous step ii) is lower than maximum load unbalanced lateral momentum value or, as non-viable otherwise;
providing data to be processed when loading the aircraft identifying load distributions to be prevented as those with the state as non-viable responsive to the number of empty rows.

2. A method according to claim 1, wherein for the selected *i* rows in step 1), step 2) is executed a plurality of times generating a plurality of random load distributions that are subsequently accumulated into a single random load distribution.

3. A method according to claim 1 or 2, wherein steps 1) and 2) are executed a plurality of times randomly selecting a different set of empty rows.

4. A method according to any one of previous claims, wherein *R* = *N.*

5. A method according to any one of previous claims, wherein determining the weight of each unlocked location as a random value responsive to the probability function or the probability distribution of the weight for a load unit is according to the following steps:
- generating a list of weights for the total number of unlocked locations according to the probability function or the probability distribution;
- sorting the generated list;
- for each row, assigning the loads to unlocked locations from the list according to the sorted order minimizing the unbalanced lateral momentum per row.

6. A data processing system comprising a processor configured to perform the steps of the method of any of claims 1 to 5.

7. A computer program product comprising instructions which, when the program is executed by a computer, cause the computer to carry out the steps of the method of any of claims 1 to 5.

## Patentansprüche

1. Computerimplementiertes Verfahren zum Verhindern eines unbrauchbaren Beladungszustands in einem Luftfahrzeug, wobei die in dem Luftfahrzeug zu ladende Last eine Vielzahl von Lasteinheiten (W) umfasst, wobei das Verfahren umfasst:
a) Empfangen von Daten eines Layouts eines Laderaums des Luftfahrzeugs, wobei das Layout umfasst
eine Menge von N Reihen, wobei jede Reihe eine Menge von M Positionen (L) umfasst, wobei die M Positionen (L) eine Teilmenge von einer oder mehreren linken Positionen (L) und eine Teilmenge von einer oder mehreren rechten Positionen (L) aufweisen;
für jede Position (L) den Abstand der Position (L) zu einer Symmetrieachse (X-X') zum Messen von seitlichen Lastmomenten, wobei die Symmetrieachse (X-X') parallel zur Rollachse des Luftfahrzeugs ist;
b) Empfangen eines maximalen unausgeglichenen seitlichen Lastmomentwerts;
c) Empfangen der Wahrscheinlichkeitsfunktion oder der Wahrscheinlichkeitsverteilung des Gewichts für eine Lasteinheit (W);
d) Vorbestimmen einer maximalen Anzahl von zu prüfenden leeren Reihen R, nämlich einer leeren Reihe einer Reihe, bei der eine Seite, die rechte Seite oder die linke Seite, gesperrt ist, wodurch verhindert wird, dass die Positionen (L) der ausgewählten Reihen beladen werden, während die gegenüberliegende Seite entsperrt ist, sodass sie beladen werden kann;
für i = 0, 1, ..., R, Durchführen einer Vielzahl von Simulationen zum Beladen des Laderaums gemäß dem empfangenen Layout, wobei, für jede Simulation,
1) zufälliges Auswählen von i Reihen als leere Reihen, wobei solche leeren Reihen auf derselben Seite leer sind;
2) Ermitteln des Gewichts jeder entsperrten Position (L) als einen Zufallswert als Reaktion auf die Wahrscheinlichkeitsfunktion oder die Wahrscheinlichkeitsverteilung des Gewichts, wodurch eine zufällige Lastverteilung generiert wird;
für jedes i = 0, 1, ..., R,
i. Generieren einer zufälligen Lastverteilung durch Akkumulieren der Vielzahl von simulierten zufälligen Lastverteilungen mit i leeren Reihen;
ii. Ermitteln des lateralen Momentes der akkumulierten Verteilung der Last in Bezug auf die Symmetrieachse (X-X') mit i leeren Reihen;
iii. Ermitteln des Beladungszustands in einem Luftfahrzeug mit i leeren Reihen als brauchbar, wenn das unausgeglichene laterale Moment, das an der akkumulierten zufälligen Lastverteilung des vorherigen Schritts ii) gemessen wird, geringer als das maximale unausgeglichene seitliche Lastmomentwert ist, oder andernfalls als unbrauchbar;
Bereitstellen von Daten, die beim Beladen des Luftfahrzeugs zu verarbeiten sind, um Lastverteilungen zu identifizieren, die als solche mit dem Zustand als unbrauchbar zu verhindern sind, als Reaktion auf die Anzahl leerer Reihen.

2. Ein Verfahren nach Anspruch 1, wobei für die ausgewählten i Reihen in Schritt 1) Schritt 2) eine Vielzahl von Malen ausgeführt wird, wodurch eine Vielzahl von zufälligen Lastverteilungen generiert werden, die anschließend zu einer einzigen zufälligen Lastverteilung akkumuliert werden.

3. Ein Verfahren nach Anspruch 1 oder 2, wobei die Schritte 1) und 2) eine Vielzahl von Malen ausgeführt werden, um eine andere Menge leerer Reihen zufällig auszuwählen.

4. Ein Verfahren nach einem der vorhergehenden Ansprüche, wobei R = N.

5. Ein Verfahren nach einem der vorhergehenden Ansprüche, wobei das Ermitteln des Gewichts jeder entsperrten Position als ein Zufallswert als Reaktion auf die Wahrscheinlichkeitsfunktion oder die Wahrscheinlichkeitsverteilung des Gewichts für eine Lasteinheit gemäß den folgenden Schritten erfolgt:
- Generieren einer Liste von Gewichten für die Gesamtzahl der entsperrten Positionen gemäß der Wahrscheinlichkeitsfunktion oder der Wahrscheinlichkeitsverteilung;
- Sortieren der generierten Liste;
- für jede Reihe Zuweisen der Lasten zu entsperrten Positionen aus der Liste gemäß der sortierten Reihenfolge, wodurch das unausgeglichene laterale Moment pro Reihe minimiert wird.

6. Ein Datenverarbeitungssystem, das einen Prozessor umfasst, der dazu ausgelegt ist, die Schritte des Verfahrens nach einem der Ansprüche 1 bis 5 durchzuführen.

7. Ein Computerprogrammprodukt, das Anweisungen umfasst, die, wenn das Programm von einem Computer ausgeführt wird, bewirken, dass der Computer die Schritte des Verfahrens nach einem der Ansprüche 1 bis 5 ausführt.

## Revendications

1. Procédé mis en œuvre par ordinateur pour empêcher un état de chargement non viable dans un aéronef, la charge à charger dans l'aéronef comprenant une pluralité d'unités de charge (W), le procédé comprenant :
a) la réception des données d'un agencement d'un espace de charge de l'aéronef, l'agencement comprenant
un ensemble de N rangées, chaque rangée comprenant un ensemble de M emplacements (L), les M emplacements (L) ayant un sous-ensemble d'emplacements gauches (L) et un sous-ensemble d'emplacements droits (L) ;
pour chaque emplacement (L), la distance de l'emplacement (L) à un axe de symétrie (X-X') pour mesurer des moments latéraux de charges, l'axe de symétrie (X-X') étant parallèle à l'axe de roulis de l'aéronef ;
b) la réception d'une valeur de moment latéral déséquilibré en charge maximale ;
c) la réception de la fonction de probabilité ou de la distribution de probabilité du poids pour une unité de charge (W) ;
d) la prédétermination d'un nombre maximal de R rangées vides à vérifier, étant une rangée vide, une rangée où un côté, le côté droit ou le côté gauche, est verrouillé empêchant le chargement des emplacements (L) desdites rangées sélectionnées alors que le côté opposé est déverrouillé permettant le chargement ;
pour i = 0, 1, ... R, effectuer une pluralité de simulations de chargement de l'espace de charge selon l'agencement reçu, dans lequel pour chaque simulation
1) la sélection aléatoirement de i rangées en tant que rangées vides, de telles rangées vides étant vides du même côté ;
2) la détermination du poids de chaque emplacement déverrouillé (L) en tant que valeur aléatoire en réponse à la fonction de probabilité ou à la distribution de probabilité du poids générant une distribution de charge aléatoire ;
pour chaque i = 0, 1, ... R,
i. la génération d'une distribution de charge aléatoire par accumulation de la pluralité de distributions de charges aléatoires simulées ayant i rangées vides ;
ii. la détermination du moment latéral de la distribution accumulée de la charge par rapport à l'axe de symétrie (X-X') ayant i rangées vides ;
iii. la détermination de l'état de chargement dans un aéronef ayant i rangées vides comme viable si le moment latéral déséquilibré mesuré sur la distribution de charge aléatoire accumulée de l'étape ii) précédente est inférieur à la valeur du moment latéral déséquilibré de charge maximale ou, dans le cas contraire, comme non viable ;
la fourniture des données à traiter lors du chargement de l'aéronef identifiant les distributions de charge à empêcher comme celles dont l'état est non viable en réponse au nombre de rangées vides.

2. Procédé selon la revendication 1, dans lequel, pour les i rangées sélectionnées à l'étape 1), l'étape 2) est exécutée une pluralité de fois générant une pluralité de distributions de charges aléatoires qui sont ensuite accumulées en une seule distribution de charges aléatoires.

3. Procédé selon la revendication 1 ou 2, dans lequel les étapes 1) et 2) sont exécutées une pluralité de fois en sélectionnant aléatoirement un ensemble différent de rangées vides.

4. Procédé selon l'une quelconque des revendications précédentes, dans lequel R = N.

5. Procédé selon l'une quelconque des revendications précédentes, dans lequel la détermination du poids de chaque emplacement déverrouillé en tant que valeur aléatoire en réponse à la fonction de probabilité ou à la distribution de probabilité du poids pour une unité de charge est effectuée selon les étapes suivantes :
- la génération d'une liste de poids pour le nombre total d'emplacements déverrouillés en fonction de la fonction de probabilité ou de la distribution de probabilité ;
- le tri de la liste générée ;
- pour chaque rangée, l'affectation des charges à des emplacements déverrouillés à partir de la liste en fonction de l'ordre trié minimisant le moment latéral déséquilibré par rangée.

6. Système de traitement de données comprenant un processeur configuré pour exécuter les étapes du procédé selon l'une quelconque des revendications 1 à 5.

7. Produit programme d'ordinateur comprenant des instructions qui, lorsque le programme est exécuté par un ordinateur, amènent l'ordinateur à effectuer les étapes du procédé selon l'une quelconque des revendications 1 à 5.
